# EUROPEAN PATENT APPLICATION

(11) **EP 3 396 199 A1**
(43) Date of publication of application: **31.10.2018**
(21) Application number: 18167899.6
(22) Date of filing: 18.04.2018
(51) Int. Cl.: F16F 9/43, F16F 9/02

(54) **SAFETY GAS SPRING**

(30) Priority: 26.04.2017 TR 201706172
(71) Applicant: Destek Otomotiv Yan Sanayi ve Ticaret Anonim Sirketi, 16159 Nulüfer, Bursa (TR)
(72) Inventor: ÖZKAN, NURETT N, 16159 BURSA (TR); KUMRU, HASAN, 16159 BURSA (TR); KUMRU, HÜSEY N, 16159 BURSA (TR)
(74) Representative: Yamankaradeniz, Kemal

(57) **Abstract**

The present invention relates to a gas spring (12) comprising a body (1) which contains a cylinder (101) filled with compressed gas (9); a movable shaft (2) inside the cylinder (101) which pressurizes the compressed gas (9); and a seal (4) which functions as a sealing member between the body (1) and the shaft. The present invention is characterized in comprising at least one gas drain pathway (801) which is formed on the shaft (2) and moves in concert with the shaft (2); aligns with the said seal (4) when the stroke (H) of the shaft (2) in the cylinder (101) exceeds the stroke limit (S) to neutralize the seal (4) and empty the cylinder (101) of compressed gas (9); and disconnects from the cylinder (101) when the stroke (H) of the shaft (2) in the cylinder (101) drops back below the stroke limit (S) to prevent discharge of compressed gas (9) from the cylinder (101).

## Description

### Field of the Invention

The present invention relates to devices known as gas spring or gas die spring, and particularly, to a safety device that prevents excessive pressure increase caused by extended stroke in closed vessels. Gas springs have many fields of application including mould making, machinery and equipment.

### Background of the Invention

Compared to spiral springs, gas springs are among the most preferred components thanks to speed control, controlled pressure on fittings through impact damping effect, easy installation, compact dimensions, very little change in load curve and wide range of applications. Current applications present an enclosed cylinder filled with compressed gas inside the gas spring body. The pressurized gas is compressed by means of a movable shaft. The shaft acts like a pre-stressed springs due to compressed gas inside the cylinder. Moreover, sealing is provided by a seal positioned between the body and the shaft.

Gas pressure increases as the shaft moves into the cylinder, and decreases as the shaft moves outside the cylinder. When the stroke length exceeds a certain permitted limit, pressure of the gas within the cylinder increases excessively depending on ambient conditions and usage, and may lead to dangerous conditions including an explosion in the cylinder. Small parts flying out of the gas spring during explosion may cause serious injuries at close proximity.

In the literature, the patent publication no. US6431332B1 describes a gas spring incorporating a safety member. In the said gas spring incorporating a safety member, when the shaft exceeds its predetermined nominal stroke, it strikes a gas drain plug on the cylinder to completely drain the cylinder of compressed gas. The gas drain plug needs to be replaced and the cylinder fixed in order to use the said gas spring again. This leads to higher maintenance costs.

Consequently, the necessity to ensure safe operation of gas springs and the shortcomings in current solutions require an improvement in the field.

### Purpose of the Invention

The present invention relates to a gas spring that meets the requirements described above, removes all disadvantages and brings some additional benefits.

The primary purpose of the present invention is to present a safety gas spring which makes it possible to prevent explosions caused by misuse.

The distinctive property of the gas spring in the present invention, which serves the above purposes in the most general sense, is that it comprises at least one gas drain pathway positioned on the shaft and moves in concert with the shaft, which lines up with the seal between the body and shaft to neutralize the seal and drain the cylinder of compressed gas when the shaft exceeds the stroke limit, and gets disconnected from the cylinder preventing gas discharge from the cylinder when the shaft stroke drops below the said limit.

The gas safety member of the gas spring in the present invention prevents the body from harm caused by excessive pressure, and enables drainage of the gas. As such, damage caused by excessive pressure is eliminated. This also ensures safer use of the gas spring. Moreover, this also eliminates any additional steps after gas drainage including replacement of parts for operation of the gas spring through refill with compressed gas.

The gas safety member placed on the shaft of the gas spring according to the invention provides for lower costs of production and maintenance both in terms of material and labour costs.

According to another aspect of the gas safety member on the shaft of the gas spring in the present invention, it is made possible to enhance safety without increasing the dimensions of the body and number of parts, and the device can be directly used in existing applications without the need for any changes.

The below drawings and the detailed description referring to these drawings provide for a clearer understanding of the structural and characteristic properties and all benefits of the present invention, therefore the evaluation needs to take these drawings and the detailed description into account.

### Brief Description of the Drawings

The embodiment of the present invention and the benefits provided by additional elements will be better understood on examination of the below drawings:
- Figure 1: is a section view of the gas spring according to the first embodiment of the invention.
- Figure 2: is a section view of the gas spring during gas drainage according to the first embodiment of the invention.
- Figure 3: is a section view of the gas spring according to the optional second embodiment of the invention.
- Figure 4: is a section view of the gas spring during gas drainage according to the optional second embodiment of the invention.
- Figure 5: presents different versions of gas drain pathways according to the optional second embodiment of the invention.

It is not absolutely required to scale the drawings, and details not needed to understand the present invention may be left out. Furthermore, considerably identical elements or elements with considerably identical functions are indicated by the same number.

### Component References

- 1.: Body
101. Cylinder
- 2.: Shaft
201. Lateral surface
202. Upper surface
- 3.: Straight Bearing
- 4.: Seal
401. Lower lip
- 5.: O-ring
- 6.: Snap ring
- 7.: Refill kit
- 8.: Gas safety member
801. Gas drain pathway
802. Gas drain hole
803. Gas drain notch
804. Gas drain channel
- 9.: Compressed gas
- 10.: Dust seal
- 11.: Bearing ring
- 12.: Gas spring

- H:: Stroke
- S:: Stroke limit

### Detailed Description of the Invention

This detailed description demonstrates the gas spring (12) of the present invention for better understanding with non-limiting embodiments.

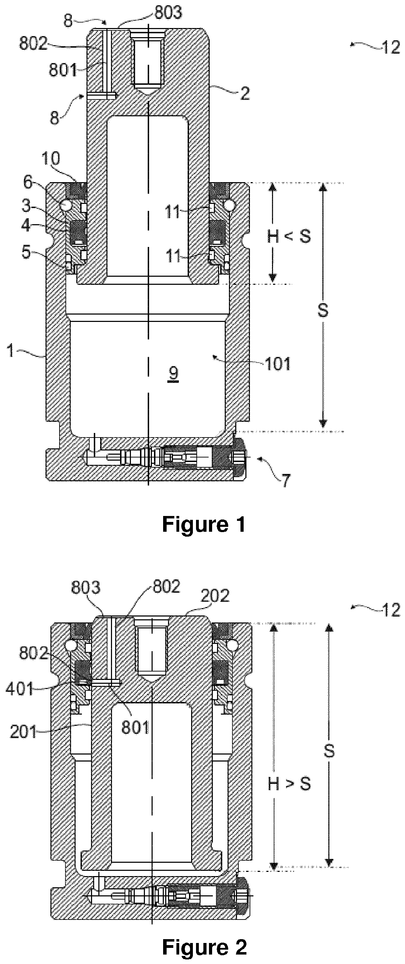

FIG. 1 is a section view of the gas spring (12) according to the first embodiment of the present invention. The gas spring (12) according to FIG. 1 comprises a cylinder (101) filled with compressed gas (9). The cylinder (101) is located inside the body (1). The cylinder (101) is filled with compressed gas (9) and emptied as and when required for maintenance by means of a refill kit (7). Compressed gas (9) is pressurized by means of a movable shaft (2) located inside the cylinder (101). The shaft (2) acts like a pre-stressed spring by means of the compressed gas (9) inside the cylinder (101). Gas pressure is adjustable by the refill kit (7) to obtain the required force on the shaft (2). The cylinder should not be filled with more than maximum permissible compressed gas (9). Sealing is ensured by a seal (4) between the body (1) and the shaft (2). Seal (4) is positioned on a straight bearing (3). Straight bearing (3) functions as a bearing to the operation of the shaft (2) inside the body (1). Bearing rings (11) support the bearing between the shaft (2) and the straight bearing (3). Moreover, an O-ring (5) between the body (1) and straight bearing (3) also serves as a sealing member. A snap ring (6) is located between the body (1) and the straight bearing (3). The snap ring (6) limits the movements of the shaft (2). Besides, the snap ring (6) pushes forward the force on the shaft (2) to the body (1). A dust seal (10) prevents dust in the outer environment from entering the cylinder (101).

As can be seen in FIG. 1, the gas spring (12) according to the invention comprises a gas safety member (8). The gas safety members (8) includes at least one gas drain pathway (801). The gas drain pathway (801) is formed only on the shaft (2), and moves in concert with it. When the stroke (H) of the shaft (2) exceeds the stroke limit (S) (see FIG. 2), gas drain pathway (801) directly opens inside the cylinder (101) and empties the cylinder (101) of compressed gas (9). By this means, gas pressure inside the cylinder (101) drops, preventing deformation or explosion on the body (1). In a typical operation of a gas spring (12), strict attention should be paid not to let the stroke (H) of the shaft (2) exceed the stroke limit (S). When the stroke (H) of the shaft (2) into the cylinder (101) drops below the stroke limit (S) (see FIG. 1), gas drain pathway (801) is disconnected from the cylinder (101), thereby preventing discharge of compressed gas (9) from the cylinder (101). This prevents any unnecessary decrease of gas pressure within the cylinder (101). Following gas drainage, the gas spring (12) is ready for operation after it is filled with sufficient amount of compressed gas (9) by means of the refill kit (7) with no need for replacement of parts.

As illustrated in the first embodiment of the invention in FIG. 1, gas inlet of the gas drain pathway (801) which opens into the cylinder (101) is formed on the lateral surface (201) of the shaft (2). When the stroke (H) of the shaft (2) inside the cylinder (101) exceeds the stroke limit (S), gas inlet of the gas drain pathway (801) goes through the lower lip (401) of seal (4) (see FIG. 2), parts from the seal (4) and opens into the cylinder (101). This allows to bypass the seal (4).

Different gas drain pathways (801) according to optional embodiments of the present gas spring (12) are described below.

As illustrated in FIG. 1 and FIG. 2, the first optional embodiment of the present invention comprises a gas drain pathway (801), the gas inlet and outlet of which are connected by means of a gas drain hole (802). The gas drain hole (802) passes through the shaft (2). Gas drain pathway (801) comprises a gas drain notch (803) at the gas outlet. Gas drain notch (803) is formed on the upper surface (202) of the shaft (2). Gas is released through a wider surface at the gas outlet by means of the gas drain notch (803). This ensures proper operation of the safety member even during blockage/clogging at the gas outlet. The gas drain notch (803) extends partially perpendicular (radial) to the shaft (2). Diameter of the gas drain notch (801) is specified according to the gas spring (12) capacity.

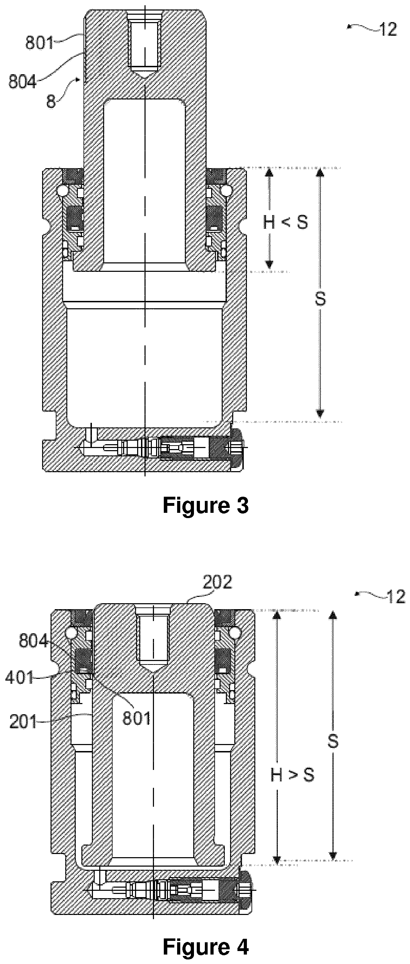

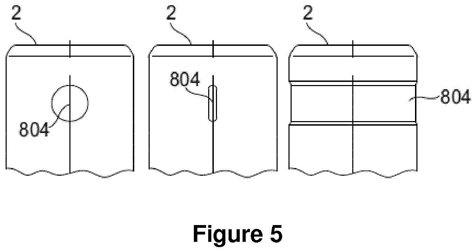

As illustrated in FIG. 3 and FIG. 4, the second optional embodiment of the present invention comprises a gas drain pathway (801), the gas inlet and outlet of which are connected by means of a gas drain channel (804). The gas drain channel (804) is formed on the lateral surface (201) of the shaft (2). FIG. 5 demonstrates different versions of the gas drain channel (804) according to the second optional embodiment of the present invention. As seen in FIG. 5, gas drain channel (804) can take a circular shape centred perpendicular (radial) to the shaft (2). Alternatively, gas drain channel (804) can take a slot shape extending partially longitudinal to the shaft (2). As an alternative, gas drain channel (804) can also take a ring shape surrounding the shaft (2). The type of the gas drain channel (804) on the gas safety member (8) is selected according to the gas spring (12) application.

## Claims

1. A gas spring (12) comprising:
a body (1) which contains a cylinder (101) filled with compressed gas (9);
a movable shaft (2) inside the cylinder (101) which pressurizes the compressed gas (9);
and a seal (4) which functions as a sealing member between the body (1) and the shaft (2);
**characterized in** comprising;
- at least one gas drain pathway (801) which is formed on the shaft (2) and moves in concert with the shaft (2); aligns with the said seal (4) when the stroke (H) of the shaft (2) in the cylinder (101) exceeds the stroke limit (S) to neutralize the seal (4) and empty the cylinder (101) of compressed gas (9); and disconnects from the cylinder (101) when the stroke (H) of the shaft (2) in the cylinder (101) drops back below the stroke limit (S) to prevent discharge of compressed gas (9) from the cylinder (101).

2. A gas spring (12) according to Claim 1, **characterized in that**;
- gas inlet of the gas drain pathway (801) which opens into the cylinder (101) is formed on the lateral surface (201) of the shaft.

3. A gas spring (12) according to Claim 2, comprising;
- a gas drain hole (802) passing through the shaft (2), which connects the gas inlet and gas outlet of the gas drain pathway (801).

4. A gas spring (12) according to Claim 3, comprising;
- a gas drain notch (803) formed on the upper surface (202) of the shaft (2), which is located at the gas outlet of gas drain pathway (801).

5. A gas spring (12) according to Claim 4, **characterized in that**;
- gas drain notch (803) extends partially perpendicular to the shaft (2).

6. A gas spring (12) according to Claim 1, comprising;
- a gas drain channel (804) formed on the lateral surface (201) of the shaft (2), which connects the gas inlet and gas outlet of the gas drain pathway (801).

7. A gas spring (12) according to Claim 6, **characterized in that**;
- gas drain channel (804) has a ring shape surrounding the shaft (2).

8. A gas spring (12) according to Claim 6, **characterized in that**;
- gas drain channel (804) has a slot shape extending partially longitudinal to the shaft (2).

9. A gas spring (12) according to Claim 6, **characterized in that**;
- gas drain channel (804) has a circular shape centred perpendicular (radial) to the shaft (2).
